# DEMANDE DE BREVET EUROPEEN

(11) **EP 1 110 777 A1**
(43) Date de publication de la demande: **27.06.2001**
(21) Numéro de dépôt: 00460066.4
(22) Date de dépôt: 22.11.2000
(51) Int. Cl.: B60J 1/20

(54) **Store à cassette démontable, élément de renfort et procédé de montage correspondants**

(30) Priorité: 21.12.1999 FR 9916195
(71) Demandeur: WAGON AUTOMOTIVE SNC, 79302 Bressuire Cédex (FR)
(72) Inventeur: Bichon, Jacky, 79300 Bressuire (FR)
(74) Mandataire: Vidon, Patrice

(57) **Abrégé**

L'invention concerne un store à enrouleur pour véhicule automobile, du type destiné à être monté dans l'habillage intérieur dudit véhicule, la toile dudit store pouvant circuler au travers d'une fente ménagée dans ledit habillage comprenant :
- au moins un élément de renfort (11), monté de façon fixe sur ladite fente, de façon à renforcer cette dernière
- une cassette amovible (13) portant un tube d'enroulement sur lequel est monté ladite toile,
ladite cassette étant solidarisée de façon amovible audit élément de renfort, de telle sorte que ladite cassette puisse être démontée sans nuire au renfort et/ou à la finition dudit habillage.

## Description

Le domaine de l'invention est celui des stores à enrouleur, notamment pour véhicules automobiles. Plus précisément, l'invention concerne les stores destinés à être rapportés sous un élément du véhicule formant support, tel qu'une tablette arrière, l'habillage d'une porte latérale ou de hayon...

Selon cette technique, une ouverture en forme de fente est ménagée dans l'élément support, par laquelle peut circuler le rideau du store. Le boîtier et le mécanisme d'enroulement du store sont donc camouflés sous l'élément support, et seul est apparente, lorsque le store est replié, la barre de tirage, qui vient prendre appui dans l'élément support.

Plusieurs méthodes sont connues pour solidariser le boîtier du store à son élément support. Parmi celles-ci, on connaît notamment une technique selon laquelle le store est monté dans un boîtier ou cassette qui est ensuite rapporté sous l'élément support. Dans ce type de réalisation, la cassette contient et protège la toile à l'état enroulé, une fente étant ménagée dans la cassette pour le passage de la toile. Les parois constituant la fente sont en outre prolongées pour former, avec le boîtier contenant la toile, un U de part de d'autre de la fente. Cette disposition permet le montage, par pincement, de la cassette sur l'élément du véhicule formant support.

Ce type de solution permet un montage relativement aisé, tout en conférant à la cassette les fonctions de protection de la toile et de finition des habillages intérieurs des véhicules.

Cependant, pour diverses raisons (mécanisme d'enroulement détérioré, toile bloquée ou endommagée...), il est parfois nécessaire de démonter la cassette pour accéder au store. Cette opération est souvent difficile, car il faut pincer la cassette pour dégager les lèvres de la fente. Cela nécessite généralement l'utilisation d'un outil spécial et des manipulations peu aisées, en particulier lorsque le store est monté dans une portière, l'accès étant alors réduit. En outre, le fait d'ôter la cassette fragilise l'élément support. En effet, dans les véhicules modernes, celui-ci est généralement réalisé dans un matériau souple, déformable et/ou qui se détériore facilement. Ainsi, une fois la cassette démontée, l'habillage devient fragile en l'absence de renfort, en particulier dans la région de la fente.

L'invention a notamment pour objectif de pallier ces inconvénients de l'art antérieur.

Plus précisément, l'invention a pour objectif de fournir un boîtier de store à enrouleur, destiné à être mis en place sur un élément support quelconque d'un véhicule, qui puisse être démonté et remonté facilement, sans engendrer de détérioration du support ou du boîtier.

Un autre objectif de l'invention est de fournir un tel store, qui préserve l'aspect esthétique de l'intérieur du véhicule, et ce même lorsque le store est démonté.

L'invention a également pour objectif de fournir un tel store, qui soit peu coûteux à fabriquer et à mettre en oeuvre.

Ces objectifs sont atteints à l'aide d'un store à enrouleur pour véhicule automobile, du type destiné à être monté dans l'habillage intérieur dudit véhicule, la toile dudit store pouvant circuler au travers d'une fente ménagée dans ledit habillage, et comprenant:
- au moins un élément de renfort, monté de façon fixe sur ladite fente, de façon à renforcer cette dernière ; et
- une cassette amovible portant un tube d'enroulement sur lequel est monté ladite toile,
ladite cassette étant solidarisée de façon amovible audit élément de renfort, de telle sorte que ladite cassette puisse être démontée sans nuire au renfort et/ou à la finition dudit habillage.

Contrairement aux solutions antérieures dans lesquelles la cassette et les éléments de renfort et de finition forment un ensemble monolithique, l'invention consiste notamment à dissocier matériellement la fonction "store" de la fonction "renfort/finition". Sont donc séparés le ou les éléments de renfort destinés à être montés une fois pour toute sur l'habillage, la cassette portant le store et, le cas échéant, l'élément de finition.

Ainsi, la cassette peut être démontée puis remontée sans nuire au renfort et à la finition de l'habillage.

Un tel store peut notamment être monté dans l'habillage intérieur d'une portière de véhicule ou sous la tablette arrière d'un véhicule.

Selon une approche avantageuse, le ou lesdits éléments de renfort présentent au moins une terminaison d'accrochage, sur laquelle vient s'encliqueter ladite cassette.

Les opérations de solidarisation et de désolidarisation sont ainsi particulièrement simple.

De façon avantageuse, le ou lesdits éléments de renfort présentent au moins un cavalier venant chevaucher un bord de ladite fente.

Selon un premier mode de réalisation préférentiel de l'invention, lesdits éléments de renfort s'étendent sensiblement symétriquement sur les deux bords longitudinaux de ladite fente. Ils peuvent se présenter sous la forme de deux pièces distinctes, ou avantageusement sous la forme d'une pièce unique.

Avantageusement, ladite cassette présente alors des moyens de solidarisation audit ou auxdits éléments de renfort, s'étendant sensiblement dans le prolongement de chacune des parois latérales de ladite cassette.

Selon un second mode de réalisation préférentiel de l'invention, lesdits le ou lesdits éléments de renfort s'étendent sur un seuls des bords longitudinaux de ladite fente, et ladite cassette présente une lèvre prévu pour venir prendre appui sur l'autre bord longitudinal de ladite fente.

De façon préférentielle, le store de l'invention comprend un élément de finition rapporté sur lesdits éléments de renfort.

Selon une variante, l'élément de renfort peut assurer lui-même la fonction de finition de l'habillage.

Avantageusement, ledit élément de finition est solidarisé par au moins une pièce de solidarisation (par exemple une vis) à ladite cassette (par exemple aux paliers).

Selon un aspect avantageux de l'invention, lesdits éléments de renfort assurent également une fonction de finition et d'habillage.

Ainsi, la maintenance est simplifiée, et les coûts correspondants sont réduits, seule la partie fonctionnelle étant remplacée.

L'invention concerne également un élément de renfort en tant que tel, présentant des moyens des moyens de solidarisation amovible avec une cassette portant un tube d'enroulement d'une toile de store.

L'invention concerne encore un procédé de montage d'un store tel que décrit ci-dessus. Ce procédé comprend notamment les étapes de:
- fixation d'au moins un élément de renfort sur une fente ménagée dans ledit habillage ;
- assemblage d'une cassette portant un tube d'enroulement d'une toile de store sous l'habillage avec des moyens d'accrochage prévus à cet effet sur le ou les éléments de renfort ; et, préférentiellement,
- solidarisation d'un élément de finition avec la cassette.

D'autres caractéristiques et avantages de l'invention apparaîtront plus clairement à la lecture de la description suivante de trois modes de réalisation préférentiels de l'invention, donnés à titre d'exemples illustratifs et non limitatifs, et des figures annexées, parmi lesquelles :

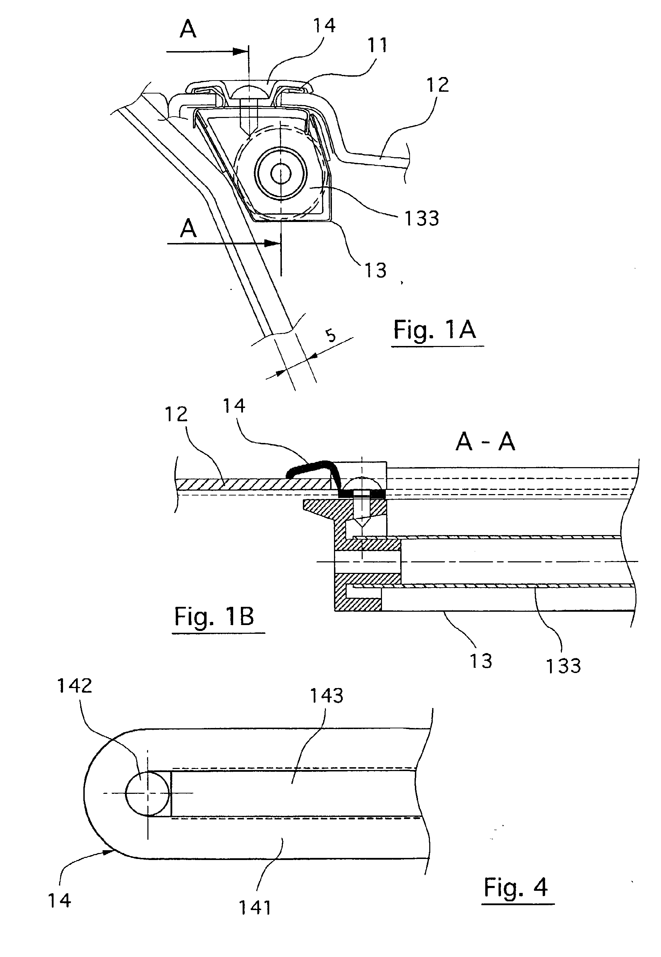

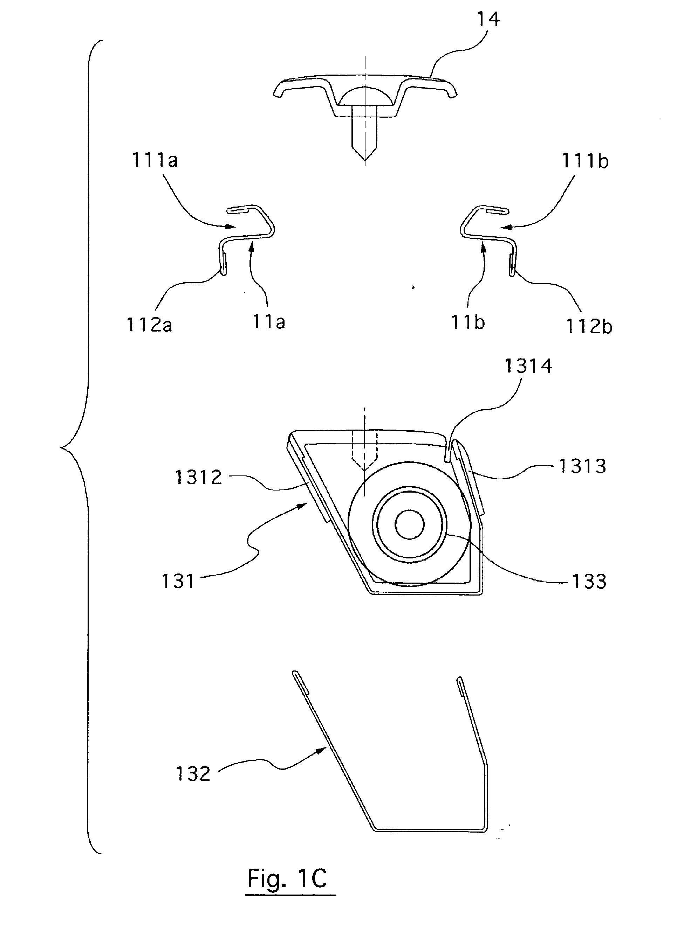

- les figures 1A, 1B et 1C illustrent un premier mode de réalisation de l'invention, avec :
   - figure 1A : vue en coupe transversale ;
   - figure 1B : vue en coupe longitudinale partielle ;
   - figure 1C : vue en éclaté, correspondant à la figure 1A.
- les figures 2A et 2B illustrent un deuxième mode de réalisation dans lequel l'élément de renfort s'étend sur un seul côté de la fente ;
- les figures 3A et 3B illustrent un troisième mode de réalisation dans lequel l'élément de renfort assure également une fonction de finition de l'habillage ;
- la figure 4 représente une vue d'un élément de finition adaptable aux différents modes de réalisation des figures précédentes.

Comme déjà précisé, l'invention repose sur une approche tout à fait nouvelle du montage des stores à cassette. Il est en effet proposé de dissocier matériellement les éléments de renfort et de finition de la cassette intégrant le tube d'enroulement. Le ou les éléments de renforts sont fixes sur l'habillage intérieur du véhicule tandis que la cassette est montée de façon facilement amovible sur le ou lesdits éléments de renfort.

L'accès à l'intérieur de la cassette est donc largement facilité et les détériorations de l'un quelconque des éléments de montage ou de l'habillage sont évitées, ce qui n'était pas le cas avec les solutions antérieures. De plus, l'habillage conserve sa forme et sa rigidité, même en l'absence de cassette.

Selon un premier mode de réalisation illustré par les figures 1A, 1B et 1C, les éléments de renfort 11a et 11b comportent des cavaliers 111a, 111b destinés à venir chevaucher les bords 121 et 122 de la fente ménagée dans l'habillage 12, pour permettre le passage de la toile.

Les éléments de renfort 11a et 11b doivent rester en place en l'absence du store pour assurer la rigidité de l'habillage. Aussi, une opération de collage et/ou de sertissage des cavaliers 111a et 111b sur l'habillage 12 peut avantageusement consolider la fixité de la liaison.

Les éléments de renfort 11a et 11b peuvent être deux pièces indépendantes, ou former une seule pièce, les deux éléments étant alors reliés par au moins une de leurs extrémités. Dans ce cas, ils peuvent être mis en place en exerçant un pincement qui rapproche les deux éléments de façon qu'ils passent au travers de la fente. Une force de rappel tend ensuite naturellement à les écarter, et les maintenir en place.

Les parties inférieures des cavaliers 111a et 111b sont respectivement prolongées par des terminaisons 112a et 112b qui forment sous l'habillage une zone d'accrochage dans laquelle des éléments complémentaires de la cassette 13 viennent s'insérer, de façon que cette dernière soit maintenue en position.

La cassette 13 comporte des paliers 131, reliés par une entretoise, portant le rouleau d'enroulement 133, et un boîtier 132 présentant une section sensiblement en forme de U. Ces éléments sont assemblés au montage par introduction des montants du boîtier 132 dans les rainures 1312, 1313 ménagées de part et d'autre des paliers 131.

Avantageusement, l'ensemble formé par les paliers et l'entretoise portant la toile est aisément désolidarisable du boîtier, par exemple par simple encliquetage. Ainsi, lors d'une opération de maintenance, il suffit de remplacer les paliers et le rouleau, de les remettre en place dans le boîtier puis de remonter ce dernier sous l'habillage.

De façon à s'adapter à l'espace généralement disponible sous l'habillage intérieur des véhicules, la cassette présente une section dissymétrique, le bord supérieur de la cassette formant avec un montant un angle aigu, et avec l'autre montant un angle obtus. L'angle aigu de la cassette est directement maintenu par encliquetage dans les terminaisons 112a de l'élément de renfort 11a. Du côté de l'angle obtus, les paliers 131 présentent une fente 1314 dans laquelle s'encliquètent les terminaisons 112b de l'élément de renfort 11b.

La figure 4 représente une vue de l'élément de finition 14 susceptible d'être rapporté sur les éléments de renfort 11a et 11b. Le pourtour 141 de l'élément de finition est conformé pour venir recouvrir totalement les éléments de renfort 11a et 11b. Des perçages 142 sont prévus pour le passage de moyens de solidarisation/désolidarisation, par exemple des vis venant prendre position dans chacun des paliers 131.

La cassette peut par exemple être réalisée en plastique ou en aluminium.

Dans ce mode de réalisation, le montage s'effectue de la manière suivante :
- les éléments de renfort 11a et 11b sont montés fixes sur l'habillage 12, par mise en place et éventuellement collage des cavaliers 111a et 111b sur les bords de la fente de l'habillage 12 ;
- la cassette 13 est amenée sous l'habillage 12, de telle sorte que les terminaisons 112b de l'élément de renfort 11b pénètrent et s'encliquètent dans les fentes 1314 des paliers 131, l'autre extrémité supérieure des paliers venant se positionner et s'encliqueter à l'intérieur du logement formé par les terminaisons 112a de l'élément de renfort 11a;
- l'élément de finition est rapporté sur les éléments de renfort et solidarisé avec la cassette par des vis.

La cassette étant constituée d'éléments séparables, il peut être possible d'accéder à l'intérieur de la cassette sans intervenir sur les moyens de solidarisation de l'ensemble. Dans certains cas, le démontage complet n'est pas nécessaire : il peut suffire d'ôter le boîtier puis de le remettre en place sur les paliers tandis que les paliers restent solidaires des autres pièces du montage.

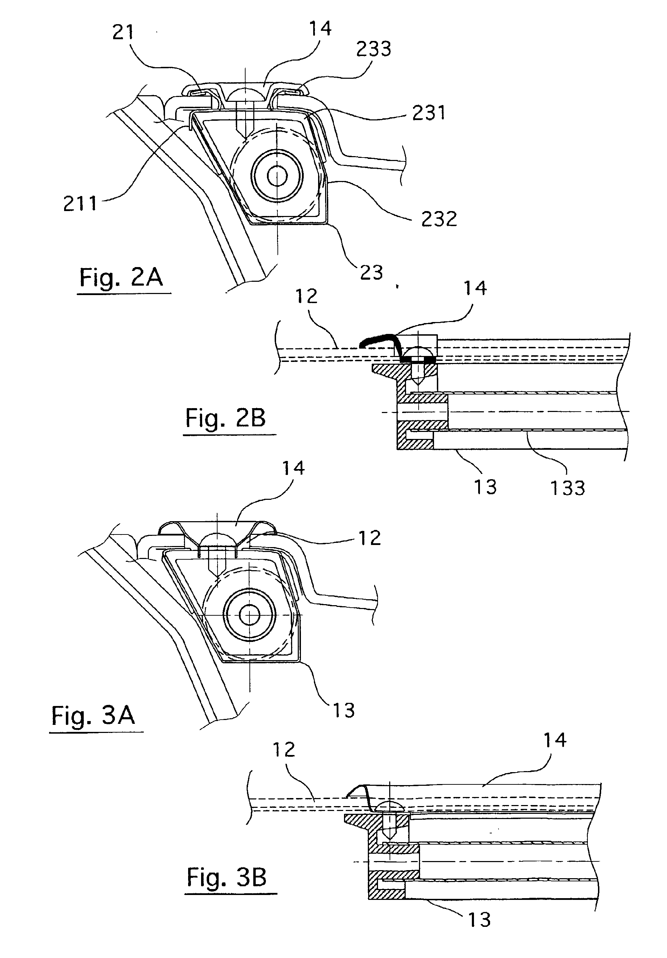

Les figures 2A et 2B illustrent un deuxième mode de réalisation, selon lequel un seul élément de renfort 21 est fixé sur un des bords longitudinaux de la fente, et éventuellement collage, sur un bord de la fente de l'habillage 12. Cet élément de renfort est similaire à ceux décrits dans le premier mode de réalisation, en particulier au niveau de son prolongement et de sa terminaison 211.

La cassette 23 présente un boîtier 232. Un montant du boîtier 232 se prolonge pour former une lèvre 233 destinée à venir prendre position sur l'autre bord longitudinal de la fente de l'habillage. L'ensemble formé par les paliers 231 et le tube d'enroulement est de la même nature que celui décrit précédemment.

L'élément de finition 14 est rapporté de manière identique au premier mode réalisation.

Dans ce deuxième mode de réalisation, le montage s'effectue de la manière suivante :
- l'élément de renfort 21 est monté fixe sur l'habillage 12, par mise en place, et éventuellement collage, de la lèvre 211 sur un bord de la fente ménagée dans l'habillage;
- la cassette 23 est fixée sur le bord inoccupé de la fente, par l'intermédiaire de sa lèvre 233, l'autre extrémité supérieure de la cassette venant se positionner et s'encliqueter à l'intérieur du logement formé par la terminaison 211 de l'élément de renfort 21, par un mouvement de rotation de la cassette ;
- l'élément de finition est rapporté sur l'élément de renfort et la lèvre de la cassette, puis solidarisé avec la cassette par des vis.

Selon un troisième mode de réalisation illustré par la figure 3, on prévoit l'élément unique de renfort et de finition 14, qui est encastré dans la fente ménagée dans l'habillage 12. L'élément de renfort et de finition 14, tel que représenté sur la figure 4, comporte un pourtour 141 destiné à venir en appui sur l'habillage 12, les bords du pourtour 141 étant repliés vers l'intérieur de l'élément de renfort de façon à constituer une gorge 143 qui coïncide avec la fente de l'habillage 12, et s'encastre sur les bords de cette dernière.

L'élément de renfort et de finition 14 doit rester en place après démontage de la cassette pour continuer à assurer la rigidité de l'habillage. Aussi, une opération de fixation par exemple par collage, du pourtour 141 sur l'habillage 12 peut avantageusement être prévue pour consolider la liaison déjà obtenue par encastrement de la gorge 143 de l'élément 14 dans la fente de l'habillage 12.

A chaque extrémité de l'élément de renfort et de finition 14, sont prévus des perçages pour le passage de moyens de solidarisation, par exemple des vis, tel que représenté sur la figure 3.

Dans ce mode de réalisation, le montage s'effectue de la manière suivante :
- l'élément de renfort et de finition 14 est monté fixe sur l'habillage 12, par encastrement de la gorge 142 dans la fente de l'habillage 12;
- la cassette 13 est amenée sous l'habillage 12, en regard de l'élément de renfort et de finition 14 ;
- des moyens de solidarisation, par exemple des vis, sont rapportés pour créer une liaison par pincement de la cassette et de l'élément de renfort et de finition avec l'habillage.

La maintenance du store peut donc s'effectuer par simple désolidarisation de la cassette et de la pièce de renfort et de finition.

L'invention propose donc un store à cassette, des moyens de fixation dudit store sur un habillage intérieur de véhicule et un procédé de montage tout à fait nouveau. Les différentes parties assurant le renfort et la finition de l'habillage et la protection de la toile sont matériellement séparées et combinent leur fonction pour faciliter le montage/démontage du store.

Comme déjà mentionné, les éléments fonctionnels (paliers, rouleau, rideau) sont avantageusement aisément séparables, sous la forme d'un ensemble unique, du boîtier. Il est ainsi possible de fournir, en tant que pièce de rechange, cet ensemble unique, qui est interchangé avec un ensemble défectueux, tout en conservant le boîtier amovible d'origine. Ainsi, on limite les coûts, et on simplifie les opérations de maintenance.

## Revendications

1. Store à enrouleur pour véhicule automobile, du type destiné à être monté dans l'habillage intérieur dudit véhicule, la toile dudit store pouvant circuler au travers d'une fente ménagée dans ledit habillage,
caractérisé en ce qu'il comprend :
- au moins un élément de renfort (11, 11a, 11b ; 21), monté de façon fixe sur ladite fente, de façon à renforcer cette dernière ;
- une cassette amovible (13 ; 23) portant un tube d'enroulement sur lequel est monté ladite toile,
ladite cassette étant solidarisée de façon amovible audit élément de renfort (11, 11a, 11b ; 21), de telle sorte que ladite cassette puisse être démontée sans nuire au renfort et/ou à la finition dudit habillage.

2. Store à enrouleur selon la revendication 1, caractérisé en ce que le ou lesdits éléments de renfort présentent au moins une terminaison d'accrochage (112a, 112b, ; 211), sur laquelle vient s'encliqueter ladite cassette.

3. Store à enrouleur selon l'une quelconque des revendications 1 et 2,
caractérisé en ce que le ou lesdits éléments de renfort présentent au moins un cavalier (111a, 111b) venant chevaucher un bord de ladite fente.

4. Store à enrouleur selon l'une quelconque des revendications 1 à 3,
caractérisé en ce que lesdits éléments de renfort s'étendent sensiblement symétriquement sur les deux bords longitudinaux de ladite fente.

5. Store à enrouleur selon l'une quelconque des revendications 1 à 4,
caractérisé en ce que ladite cassette présente des moyens de solidarisation audit ou auxdits éléments de renfort s'étendant sensiblement dans le prolongement de chacune des parois latérales de ladite cassette.

6. Store à enrouleur selon l'une quelconque des revendications 1 à 5,
caractérisé en ce que le ou lesdits éléments de renfort (21) s'étendent sur un des bords longitudinaux de ladite fente, et en ce que ladite cassette présente une lèvre (233) prévu pour venir prendre appui sur l'autre bord longitudinal de ladite fente.

7. Store à enrouleur selon l'une quelconque des revendications 1 à 6,
caractérisé en ce qu'il comprend un élément de finition (14) rapporté sur lesdits éléments de renfort.

8. Store à enrouleur selon la revendication 7, caractérisé en ce que ledit élément de finition (14) est solidarisé par au moins une pièce de solidarisation à ladite cassette.

9. Store à enrouleur selon l'une quelconque des revendications 1 à 6,
caractérisé en ce que lesdits éléments de renfort (14) assurent également une fonction de finition et d'habillage.

10. Store à enrouleur selon l'une quelconque des revendications 1 à 9,
caractérisé en ce qu'il comprend un ensemble fonctionnel (131) comprenant deux paliers et ledit tube d'enroulement, monté sur lesdits paliers, ledit ensemble fonctionnel (131) étant monté de façon amovible dans le boîtier (132) de ladite cassette.

11. Elément de renfort destiné à être monté de façon fixe sur une fente ménagée sur l'habillage intérieur d'un véhicule automobile, ladite fente permettant le passage d'une toile d'un store à enrouleur,
ledit élément de renfort (11, 11a, 11b ; 21), présentant des moyens de solidarisation amovible avec une cassette portant un tube d'enroulement de ladite toile.

12. Procédé de montage d'un store à enrouleur dans l'habillage intérieur d'un véhicule automobile, caractérisé en qu'il comprend les étapes de :
- fixation d'au moins un élément de renfort (11, 11a, 11b ; 21), sur une fente ménagée dans ledit habillage ;
- assemblage d'une cassette (13) portant un tube d'enroulement d'une toile de store sous l'habillage avec des moyens d'accrochage prévus à cet effet sur le ou les éléments de renfort ; et, préférentiellement,
- solidarisation d'un élément de finition (14) avec la cassette.
